(19) Europäisches Patentamt / European Patent Office / Office européen des brevets

(11) **EP 3 617 751 B1**

(12) **FASCICULE DE BREVET EUROPEEN**

(45) Date de publication et mention
de la délivrance du brevet:
**08.09.2021 Bulletin 2021/36**

(51) Int Cl.:
*G01T 1/36* (2006.01)   *G01T 1/40* (2006.01)

(21) Numéro de dépôt: **19192857.1**

(22) Date de dépôt: **21.08.2019**

(54) **PROCÉDÉ D'AUTO-CALIBRATION D'UN DISPOSITIF DE DÉTECTION DE RAYONNEMENTS IONISANTS**

SELBSTKALIBRIERUNGSVERFAHREN EINER VORRICHTUNG ZUR ERFASSUNG VON IONISIERENDER STRAHLUNG

METHOD FOR SELF-CALIBRATION OF A DEVICE FOR DETECTING IONISING RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.08.2018 FR 1857708**

(43) Date de publication de la demande:
**04.03.2020 Bulletin 2020/10**

(73) Titulaire: **ICOHUP**
**87280 Limoges (FR)**

(72) Inventeur: **PATTON, Gaël**
**87590 Saint-Just-le-Martel (FR)**

(74) Mandataire: **Plasseraud IP**
**5 Cours de Verdun**
**33000 Bordeaux (FR)**

(56) Documents cités:
**FR-A1- 3 020 470     US-A1- 2011 101 232**
**US-A1- 2018 113 160     US-B2- 7 065 473**

EP 3 617 751 B1

## Description

### Domaine technique

La présente invention a trait à un procédé de spectrométrie pour la détection et la caractérisation de rayonnements ionisants.

Elle concerne également un procédé de calibration d'un spectromètre et un procédé d'accroissement de la sensibilité spectrale d'un spectromètre mettant en œuvre un tel procédé de spectrométrie.

Elle concerne encore un dispositif de détection de radiation pour la mise en œuvre de ce procédé.

### Technique antérieure

Dans de nombreux domaines, il est connu d'utiliser des détecteurs de rayonnements ionisants pour détecter des rayonnements émis par une source radioactive, dans un environnement donné.

A titre purement illustratif, les informations fournies par ces détecteurs peuvent être utiles dans des zones environnant des centrales nucléaires, dans des sites industrielles, des lieux de lutte contre le transport illicite de matières radioactives ou plus simplement, à la recherche de sources de rayonnement isolées.

Certains détecteurs de rayonnements ionisants sont aujourd'hui capables de mesurer un niveau de radioactivité et d'identifier la source de ce rayonnement à partir de la mesure de la distribution des énergies de rayonnement (spectrométrie).

Toutefois, on observe que les spectromètres à rayonnements ionisants utilisant le principe de scintillation sont sujets à des dérives de détection et au vieillissement de leurs différents éléments constitutifs : photo détecteur, amplificateur, scintillateur, ...

Notamment, les rayonnements ionisants peuvent induire des défauts structurels dans le corps du scintillateur, qui sont alors à l'origine d'altérations, ou artefacts, plus ou moins importantes dans les mesures réalisées.

De même, certains composants de ces spectromètres peuvent encore être sensibles à l'hygrométrie ambiante et/ou à la température.

On constate donc que, pour la caractérisation des rayonnements ionisants, ces spectromètres requièrent de fréquents étalonnages.

Il est généralement prévu de retourner ces spectromètres à l'usine de production ou de les envoyer à une société spécialisée afin qu'un technicien spécialiste procède à leur étalonnage.

Bien qu'efficace, une telle opération reste toutefois très onéreuse pour l'utilisateur.

Il est encore connu d'intégrer une source étalon présentant une raie de référence, dans un spectromètre pour assurer une re-calibration régulière de ce dernier.

Toutefois, un tel procédé est complexe et très contraignant pour l'utilisateur d'un point de vue de la radioprotection.

En outre, la présence d'une telle source étalon, dite encore de référence, nécessite la mise en place d'un écran de protection dans le spectromètre, qui peut masquer une partie du champ de détection des rayonnements ionisants.

Par ailleurs, la sensibilité spectrale, encore appelée résolution en énergie, d'un scintillateur est limitée à quelques pourcents, généralement de trois (3) à douze (12) pourcents selon les scintillateurs.

En raison d'une sensibilité spectrale insuffisante d'un spectromètre, on constate que des mesures peuvent s'avérer imprécises, et par conséquent inutilisables, lorsqu'il s'agit de distinguer des émissions spectralement voisines.

Ainsi, un gain de quelques pourcents pourrait drastiquement améliorer les capacités de tout détecteur à discriminer des éléments radioactifs. Le document US2011101232 divulgue un procédé de spectrométrie, comprenant l'étape suivante: pour au moins une énergie de rayonnement ionisant, obtenir, pour chaque énergie, une courbe du nombre de photons détectés, pendant un intervalle de mesure, en fonction du temps, au moyen d'un spectromètre. Les documents FR3020470 et US7065473 divulguent chacun un procédé similaire. En outre, ces trois documents cherchent à proposer une solution au problème de la calibration en énergie. Enfin, le document US2018113160 décrit un procédé de détermination d'une caractéristique d'un signal d'impulsion, et, en particulier, le temps d'arrivée de ladite impulsion.

Il existe donc un besoin pressant pour un procédé de spectrométrie dont la conception originale permette d'améliorer les performances d'un spectromètre pour la détection de rayonnements ionisants.

### Objet de l'invention

La présente invention vise à pallier les inconvénients de l'art antérieur en proposant un procédé de spectrométrie et un dispositif de détection de rayonnements ionisants, simples dans leur conception et dans leur mode opératoire, fiables et économiques, permettant d'améliorer les capacités d'un spectromètre.

Un autre objectif de la présente invention est un procédé de calibration d'un spectromètre permettant de corriger les éventuelles dérives de mesure observées tout en autorisant une auto-calibration en temps réel du spectromètre sans ajout d'une ou plusieurs sources étalons.

Encore un objectif de la présente invention est un procédé d'augmentation de la sensibilité spectrale d'un spectromètre pour assurer une meilleure différentiation des radioisotopes.

Encore un objet de la présente invention est un détecteur de rayonnements ionisants économique et compact pour la mise en œuvre de ces procédés.

## Exposé de l'invention

A cet effet, l'invention concerne un procédé de spectrométrie, selon la revendication 1, dans lequel on réalise les étapes suivantes :

a) pour au moins une énergie $E_i$ de rayonnement ionisant, obtenir, pour chaque énergie $E_i$, une courbe du nombre de photons détectés, pendant un intervalle de mesure, en fonction du temps, au moyen d'un spectromètre,

b) pour chaque courbe ainsi obtenue, calculer un rapport du nombre total de photons détectés sur au moins deux périodes de temps déterminées et distinctes afin d'obtenir pour chaque énergie $E_i$ de rayonnement ionisant un nombre $a_i$, ou

pour chaque courbe ainsi obtenue, acquérir un ou plusieurs paramètres d'ajustement $PAJ_i$ en opérant un ajustement de ladite courbe correspondante par une fonction d'ajustement,

c) comparer chaque nombre $a_i$, ou chaque paramètre ou ensemble de paramètres d'ajustement $PAJ_i$ ainsi obtenus, avec des constantes $a_i(REF)$ de référence, ou respectivement avec des paramètres d'ajustement $PAJ_i(REF)$ de référence, associés à des énergies $E_i(REF)$ de référence pour déterminer pour chaque nombre $a_i$ ou chaque paramètre ou ensemble de paramètres d'ajustement $PAJ_i$, l'énergie $E_i(REF)$ de référence du rayonnement ionisant pour lequel ladite courbe correspondante a été mesurée.

Le présent procédé s'applique pour la mesure de tout rayonnement alpha (a), béta (β), gamma (y), rayons X ou neutrons (n) ou encore tout autre type de particules ionisantes, la bande d'analyse spectrale du spectromètre étant fonction du scintillateur utilisé, de la géométrie de détection et de l'électronique utilisée.

Par la suite, on entend par « événement », une interaction entre un rayonnement ionisant incident et le scintillateur. Chaque événement engendre l'émission de photons de scintillation par le scintillateur. Cette émission de photons suit une courbe de déclin de scintillation au cours du temps. A l'étape a), on obtient ainsi pour chaque énergie $E_i$ de rayonnement ionisant incident, ou énergie d'excitation, une courbe ou représentation graphique à deux dimensions (amplitude en fonction du temps), dénommé distribution temporelle, ou encore appelé déclin de scintillation.

A l'étape b), le nombre $a_i$ peut être obtenu par un rapport simple de deux périodes de temps déterminées ($T_1/T_2$) ou résulter d'un calcul plus complexe tel que ($T_1 + T_3$)/$T_2$ ou ($T_1 \times \exp(T_3)$)/$T_2$.

Dans différents scintillateurs, cette courbe de déclin de scintillation peut être décrite comme une fonction mono-exponentielle, multi-exponentielle ou non exponentielle. Ainsi, et de manière alternative, l'étape b) du procédé de spectrométrie peut consister en un ajustement de chaque courbe, ou partie de courbe, de déclin de scintillation obtenue pour une énergie de rayonnement $E_i$ par une fonction d'ajustement, laquelle sera choisie parmi une fonction d'ajustement mono-exponentielle, une fonction d'ajustement multi-exponentielle ou encore une fonction d'ajustement non exponentielle telle que polynomiale.

A l'étape c), lorsque le nombre $a_i$ est égal à la constante $a_i(REF)$ ou lorsque le ou l'ensemble de paramètres $PAJ_i$ sont égaux au paramètre ou aux paramètres $PAJ_i(REF)$ de référence, l'énergie $E_i$ du rayonnement ionisant pour lequel la courbe correspondante a été obtenue à l'étape a) avec le spectromètre à scintillation est égale à $E_i(REF)$ de référence associée.

A l'étape b), les périodes de temps sont prises identiques pour l'ensemble des courbes. Eventuellement, elles peuvent changer suivant le type de particules à détecter et elles changent nécessairement en fonction du type de scintillateur utilisé.

Un tel procédé autorise avantageusement une calibration en temps réel, ou encore en continue, du spectromètre. Il n'est ainsi plus nécessaire de procéder à des maintenances ce qui autorise des gains financiers ainsi que de temps.

Plus le nombre d'évènements mesurés est important, meilleure sera la pertinence de la calibration.

Dans différents modes de réalisation particuliers de ce procédé, chacun ayant ses avantages particuliers et susceptibles de nombreuses combinaisons techniques possibles :

- à l'étape a), on obtient des courbes, pour au moins deux énergies différentes $E_i$ de rayonnement ionisant.
- à l'étape b), ledit ajustement est obtenu par une fonction d'ajustement multi-exponentielle.

On obtient ainsi un ensemble de paramètres d'ajustement $PAJ_i$ pour chaque courbe.

- ledit spectromètre comprenant un scintillateur couplé à un photodétecteur, à l'étape b), on choisit lesdites périodes de temps de sorte à maximiser la différence entre les nombres $a_i$ pour deux énergies $E_i$ différentes.

A titre purement illustratif, au moins une desdites périodes de temps correspond uniquement à un temps de décroissance, c'est-à-dire à affaiblissement du nombre de photons détectés pour l'interaction du rayonnement ionisant avec ce scintillateur.

Par exemple, l'autre desdites périodes de temps comporte le pic de photons détectés pour l'interaction du rayonnement ionisant avec ledit scintillateur.

- un scintillateur présentant un facteur de non proportionnalité de son rendement de scintillation en fonction de l'énergie $E_i$ de rayonnement ionisant, supérieur à 2% de variation par ordre de grandeur de l'énergie du rayonnement incident, par exemple en passant de 10keV à 100keV ou de 100keV à 1000keV, est utilisé dans ledit spectromètre.

La présente invention concerne également un procédé selon la revendication 6 pour calibrer un spectromètre.

Selon l'invention, on utilise un procédé de spectrométrie tel que décrit précédemment, et on réalise lesdites étapes supplémentaires suivantes :

d) comparer lesdites énergies $E_i$REF) de référence de rayonnement ionisant déterminées à l'étape c) avec les énergies correspondantes $E_i$(mes) mesurées par ledit spectromètre dans un spectre d'énergie du rayonnement ionisant, afin d'obtenir une valeur d'erreur associée à chaque mesure d'énergie de rayonnement ionisant $E_i$(mes), ladite valeur d'erreur étant une mesure d'un écart entre l'énergie mesurée $E_i$(mes) par ledit spectromètre et l'énergie de référence $E_i$(REF) correspondante déterminée à l'étape c), et

e) lorsque plusieurs valeurs d'erreur sont non nulles et sont, en valeur absolue, supérieures à des valeurs seuils, déterminer une correction d'énergie à apporter de manière permanente à chaque énergie mesurée $E_i$(mes) par ce spectromètre.

Bien entendu, cette correction n'est apportée que lorsque les valeurs d'erreur dépassent chacune une valeur seuil au-delà de laquelle il peut être considéré que le spectromètre nécessite une recalibration.

De manière avantageuse, ce procédé de calibration vise à corriger en continu les dérives du spectromètre en comparant l'amplitude des évènements de scintillation et la réponse temporelle dont les termes ont été calculés par une des deux méthodes décrites à l'étape b) du procédé de spectrométrie.

La référence est la distribution temporelle, ou déclin de scintillation, car cette dernière n'est avantageusement pas sujette à des variations telles que celles qui sont observées pour une mesure d'amplitude.

Un tel procédé de calibration assure un degré élevé de précision du calibrage du spectromètre. Un tel procédé de calibration privilégie une approche statistique, c'est-à-dire un nombre d'évènements importants.

La présente invention concerne aussi un procédé selon la revendication 7 pour augmenter la sensibilité spectrale d'un spectromètre.

Selon l'invention, on utilise un procédé de spectrométrie tel que décrit précédemment, et on réalise pour chaque évènement mesuré par ledit spectromètre, les étapes supplémentaires suivantes :

d) déterminer la différence entre l'énergie $E_i$(mes) mesurée par ledit spectromètre et ladite énergie $E_1$(REF) de référence correspondante déterminée à l'étape c) afin d'obtenir une valeur d'écart en énergie pour ledit évènement,

e) comparer la valeur absolue de cet écart en énergie avec une valeur seuil prédéterminée, dite d'acceptabilité de l'événement, et

f) si cette valeur absolue est inférieure ou égale à cette valeur seuil, alors comptabiliser cet évènement dans la création d'un spectre du nombre d'événement mesuré par le spectromètre en fonction de l'énergie $E_i$(REF) du rayonnement ionisant, et

si cette valeur absolue est supérieure à cette valeur seuil, alors écarter l'événement considéré, puis

obtenir un spectre du nombre total d'événements mesurés pour chaque énergie $E_i$(REF) de référence.

Notons que la sensibilité spectrale est définie par la distribution d'amplitude des évènements formant un pic photo-électrique sur le spectre gamma. Ce pic, correspond aux évènements de scintillation pour lesquels l'intégralité de l'énergie du rayonnement ionisant incident a été déposée. Ce dépôt d'énergie peut se faire lors d'une unique interaction entre ce rayonnement ionisant et le scintillateur, dite interaction photoélectrique, ou lors de plusieurs interactions (interaction par effet Compton suivi d'une interaction photo-électrique du photon diffusé). Ce sont notamment les évènements composés de plusieurs interactions de type Compton, qui diminuent la sensibilité spectrale du spectromètre.

Il est avantageusement proposer par ce procédé d'identifier les évènements qui correspondent à des interactions uniques afin d'augmenter la sensibilité spectrale du spectromètre. Une fois ces évènements détectés, il est alors prévu de :

a) les pondérer afin de leur donner plus de poids dans le spectre global, ou

b) de tracer une courbe nette comportant uniquement ces évènements.

Selon un mode de réalisation de ce procédé de l'invention, on utilise le spectre ainsi obtenu pour identifier ledit rayonnement ionisant correspondant à chaque énergie $E_i$(REF) de référence et éventuellement, afficher la nature dudit rayonnement ionisant correspondant.

Un tel procédé d'augmentation de la sensibilité spectrale d'un spectromètre assure un gain élevé en résolution de ce spectromètre.

La présente invention concerne encore un produit de programme informatique qui notamment est stocké sur un support lisible par ordinateur, selon la revendication 10.

A titre purement illustratif, cet ordinateur peut être un microprocesseur tel qu'un microprocesseur embarqué, c'est-à-dire intégré dans un dispositif portatif. Alternativement il peut encore s'agir d'un circuit logique programmable (FPGA - « Field Programmable Gate Array »).

Cet ordinateur peut encore être une station de travail fixe ou mobile.

La présente invention concerne aussi un dispositif de détection de rayonnement ionisant comprenant un ensemble de traitement comportant un microprocesseur et une unité de stockage informatique, cette unité de stockage contenant une bibliothèque de données comprenant des données sur plusieurs rayonnements ionisants, ledit dispositif de détection comportant un spectromètre comportant un scintillateur couplé à un photodétecteur.

Selon l'invention, ce dispositif de détection comprend un ensemble d'instructions logicielles grâce auxquelles ledit dispositif peut commander ledit spectromètre, détecter et identifier un ou plusieurs rayonnements ionisants interagissant avec ledit scintillateur, lesdites instructions logicielles appartenant audit programme d'ordinateur tel que décrit précédemment.

Selon un mode de réalisation du dispositif de l'invention, ce dispositif comprend un boîtier portatif, ce boîtier étant pourvu d'une ouverture de détection de rayonnement ionisant, ledit scintillateur présentant un axe de pointage et étant agencé dans ce boîtier de sorte que son axe de pointage soit orienté vers ladite ouverture.

De manière avantageuse, ce dispositif de détection étant dépourvu de source étalon, il n'est pas prévu d'écran de protection dans le boitier et le dispositif de détection présente un champ de détection large.

Selon un autre mode de réalisation du dispositif de l'invention, ledit photodétecteur comprend un module de mesure configuré pour convertir un signal électrique émis par ledit photodétecteur suite à la détection d'un photon et proportionnel au nombre de photons visibles détectés par le photodétecteur, en un signal numérique représentatif de l'énergie du photon mesuré.

**Brève description des dessins**

D'autres avantages, buts et caractéristiques particulières de la présente invention ressortiront de la description qui va suivre, faite, dans un but explicatif et nullement limitatif, en regard des dessins annexés, dans lesquels :

**Fig. 1**

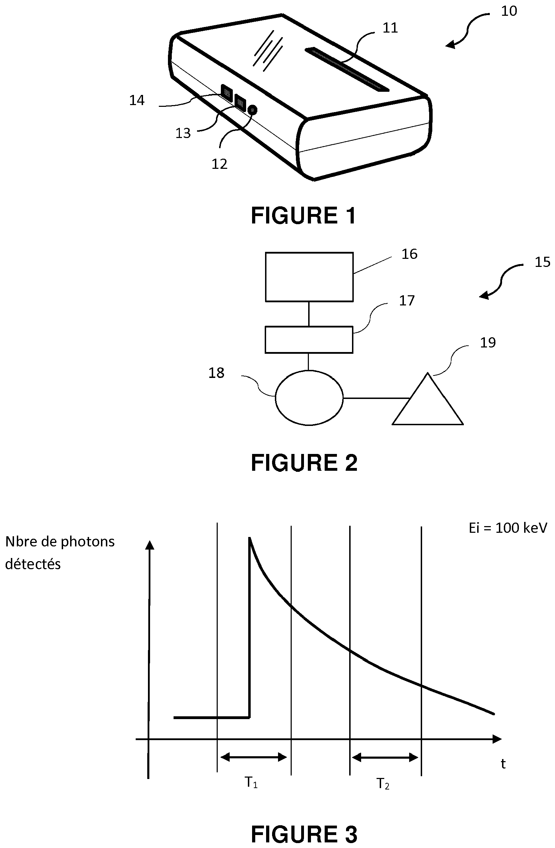

- la Figure 1 est une vue en perspective d'un dispositif de détection de rayonnements ionisants selon un mode de réalisation particulier de la présente invention;

**Fig. 2**

- la Figure 2 est une représentation schématique des composants du dispositif de détection de rayonnements ionisants de la Fig. 1, placés dans le boîtier de ce dernier ;

**Fig. 3**

- la Figure 3 est une courbe dite de déclin de scintillation, obtenue pour une énergie $E_i$ de rayonnement ionisant au moyen d'un spectromètre selon un mode de réalisation du procédé de l'invention, deux périodes de temps distinctes étant illustrées sur cette courbe ;

**Fig. 4**

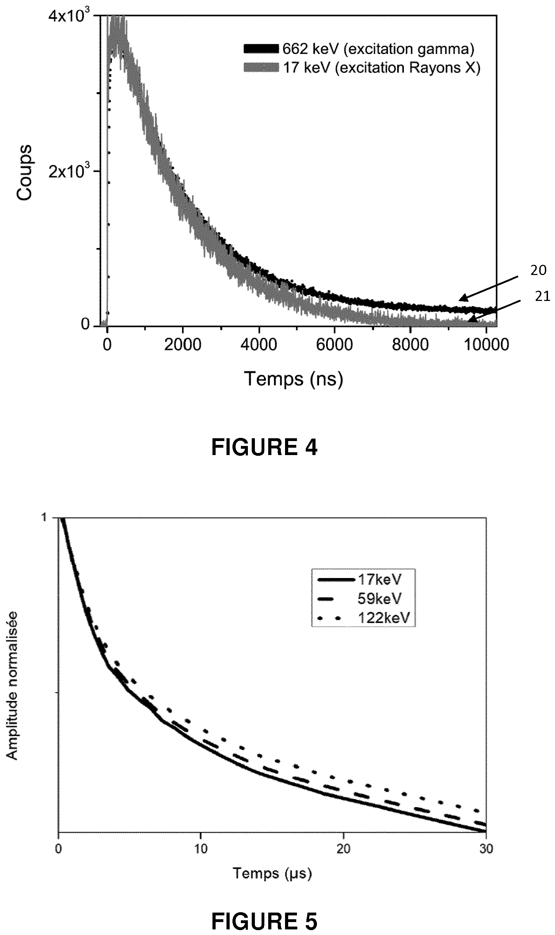

- la Figure 4 est une représentation de courbes de déclin de scintillation mesurées avec un spectromètre à scintillation pour deux énergies de rayonnements ionisants différentes, courbe inférieure, 17 keV et courbe supérieure, 662 keV ;

**Fig. 5**

- la Figure 5 illustre une partie de courbe de déclin de scintillation obtenue pour un spectromètre à scintillation avec un scintillateur inorganique de type halogénure alcalin pour différentes énergies de rayonnements ionisants : deux faisceaux (17 keV et 59 keV) issus d'atomes d'Américium 241 ($^{241}$Am) et un faisceau issu de Cobalt 57 ($^{57}$Co) ;

**Fig. 6**

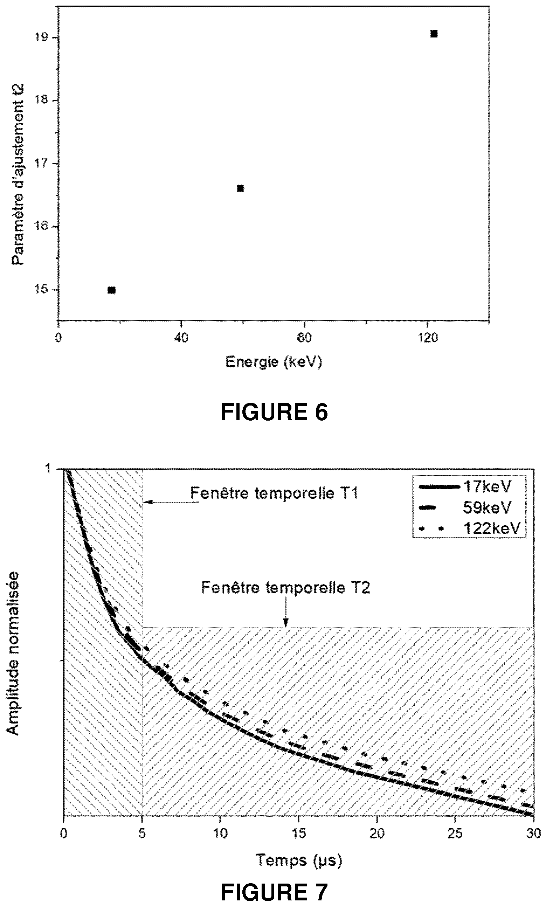

- la Figure 6 montre la variation du paramètre d'ajustement $t_2$[REF] en fonction de l'énergie de référence $E_i$(REF) en keV ; ce paramètre provenant d'un ajustement multi exponentiel des courbes illustrées à la Fig. 5 ;

**Fig. 7**

- la Figure 7 montre les parties de courbes représentées à la Fig. 5 sur lesquelles les fenêtres temporelles $T_1$ et $T_2$ retenues pour la détermination des constantes $a_i$ ont été représentées ;

**Fig. 8**

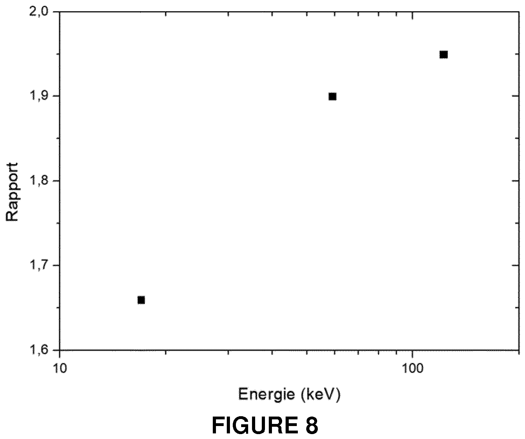

- la Figure 8 est une représentation de la variation de la constante de référence $a_i$REF), égal au rapport (Intégrale $T_1$ / Intégrale $T_2$), en fonction de l'énergie $E_i$(REF) de référence.

**Description des modes de réalisation**

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

En relation avec les Figures 1 et 2, il est décrit un détecteur de rayonnements ionisants selon un mode de réalisation particulier de la présente invention.

De par sa compacité et sa facilité d'utilisation, un tel détecteur 10 est particulièrement avantageux pour contrôler un environnement et éventuellement un objet contaminé afin de parer un danger immédiat en cas de mesure de concentrations élevées.

Ce détecteur 10 comporte un corps de détecteur pourvu d'une fenêtre d'entrée 11 sur sa face supérieure, cette fenêtre 11 étant destinée au passage de particules à détecter. De manière connue, cette fenêtre d'entrée 11 peut comporter un film étanche à la lumière, tel qu'un film connu sous le nom commercial MYLAR® ou toute autre couche mince opaque aux longueurs d'onde lumineuse détectables par le photodétecteur.

Sur un de ses bords latéraux, il comporte également un voyant 12 lumineux permettant d'afficher l'état de fonctionnement du détecteur (batterie faible, en fonctionnement ou à l'arrêt).

Il comporte aussi un connecteur 13 tel qu'un port USB pour relier ce détecteur à un ordinateur afin de charger ou décharger des données et/ou programmes informatiques, ainsi qu'un bouton 14 marche/arrêt.

Bien entendu, un tel détecteur 10 pourrait également comporter une unité de communication pour recevoir et transmettre des données.

De manière avantageuse, cette unité de communication pourrait être un module de communication sans fil configuré pour communiquer selon un des protocoles suivants : Sigfox, LoRa ou encore ZigBee. En d'autres termes, il s'agit d'un module de communication sans fil à faible puissance permettant d'économiser la batterie équipant le détecteur. Il pourrait encore comprendre un module de communication sans fil tel qu'un module de communication Bluetooth pour adresser des données ou messages lorsqu'une détection de non couverture Sigfox ou LoraWan serait réalisée.

Bien entendu, il pourrait encore s'agir d'un module de communication sans fil basé sur un des protocoles suivants : IEEE 802.11 b/g/n (Wi-Fi), IEEE 802.15.1 (Bluetooth), ou 2G, 3G, 4G, 5G ou encore GSM ou GPRS.

Il pourrait encore comporter un moyen de localisation sans fil tel qu'un récepteur GPS, pour déterminer sa position ainsi qu'une unité de stockage pour conserver des données horodatées.

Chacune de ces données comprendrait alors une position et une heure à laquelle cette position a été acquise par le récepteur GPS ainsi que la détection ou non de rayonnements ionisants.

Le corps du détecteur est ici réalisé entièrement dans un bois noble tel que du Frêne, mais il pourrait également être réalisé dans un autre matériau tel que dans une matière plastique dure.

Les parois intérieures de ce corps de détecteur sont opaques pour bloquer la lumière extérieure.

Dans le volume intérieur délimité par le corps de détecteur 10 est placé un spectromètre 15 permettant de détecter des particules, compter celles-ci et obtenir des spectres d'énergie.

Ce spectromètre comprend ainsi un scintillateur 16 pour mesurer simultanément des rayonnements $\alpha$ et $\beta$. Ce scintillateur 16 est ici formé par un empilement de couches de différents matériaux scintillateurs inorganique et organique.

Ce scintillateur 16 est un corps allongé, tel qu'une barrette, placé en regard de la fente pour recevoir des particules traversant cette fenêtre d'entrée 11. Les dimensions de ce scintillateur sont à titre purement illustratif de 6*6* 50mm. Elles pourraient également être de 6*6*100 mm ou encore de 30*30*30mm.

Un photodétecteur 17 est couplé optiquement à ce scintillateur 16 et comporte un module de mesure 18 configuré pour convertir un signal électrique émis par ce photodétecteur 17 suite à la détection d'un photon et proportionnel au nombre de photons visibles détectés par le photodétecteur, en un signal numérique représentatif de l'énergie du photon mesuré. Ce photodétecteur 17 présente donc une sensibilité en adéquation avec les longueurs d'onde d'émission du scintillateur. Il s'agit ici d'un capteur de type "photomultiplicateur silicium" (ou SiPM), mais il peut également s'agir de tubes photomultiplicateurs traditionnels ou de photodiodes.

Il comprend encore un ensemble 19 de traitement comportant un microprocesseur, ou un circuit logique programmable (FPGA), et une unité de stockage informatique, cette unité de stockage contenant une bibliothèque de données comprenant des données sur des rayonnements ionisants (énergies, ...).

Ce détecteur 10 comprend un ensemble d'instructions logicielles grâce auxquelles il peut commander ce spectromètre, détecter et identifier un ou plusieurs rayonnements ionisants interagissant avec ledit scintillateur, lesdites instructions logicielles appartenant à un programme d'ordinateur permettant de mettre en œuvre au moins certaines des étapes du procédé suivant :

a) pour au moins une énergie $E_i$ de rayonnement ionisant, obtenir, pour chaque énergie $E_i$, une courbe du nombre de photons détectés, pendant un intervalle de mesure, en fonction du temps, au moyen d'un spectromètre,

b) pour chaque courbe ainsi obtenue, calculer un rapport du nombre total de photons détectés sur au moins deux périodes de temps déterminées et distinctes afin d'obtenir pour chaque énergie $E_i$ de rayonnement ionisant un nombre $a_i$, ou

pour chaque courbe ainsi obtenue, acquérir un ou plusieurs paramètres d'ajustement $PAJ_i$ en opérant un ajustement de ladite courbe correspondante par une fonction d'ajustement,

c) comparer chaque nombre $a_i$, ou chaque paramètre ou ensemble de paramètres d'ajustement $PAJ_i$ ainsi obtenus, avec des constantes $a_i(REF)$ de référence, ou respectivement avec des paramètres d'ajustement $PAJ_i(REF)$ de référence, associés à des énergies $E_i(REF)$ de référence pour déterminer pour chaque nombre $a_i$, ou chaque paramètre ou ensemble de paramètres d'ajustement $PAJ_i$, l'énergie $E_i REF$) de référence du rayonnement ionisant pour lequel ladite courbe correspondante a été mesurée.

La Figure 3 représente un exemple de courbe, dit de déclin de scintillation, obtenu à l'étape a) pour une énergie de rayonnement ionisant incident sur le scintillateur. A partir de cette courbe de déclin de scintillation, le microprocesseur, ou le FPGA, détermine deux périodes de temps distinctes $T_1$ et $T_2$. Pour chacune de ces périodes de temps, il intègre alors le nombre de photons émis par le scintillateur, encore appelé quantité de lumière, puis calcule le rapport du nombre total de photons détectés sur la période $T_1$ sur le nombre total de photons détectés sur la période $T_2$ lequel fournit un nombre a associé à l'énergie d'excitation (étape b).

A l'étape c), il compare le nombre a ainsi obtenu avec des constantes a(REF), b(REF), c(REF), ... de référence associées chacune à une énergie E(REF) de référence pour identifier l'énergie E(REF) de référence pour laquelle le nombre a a été obtenu.

Ce procédé permet ainsi d'identifier de manière très précise l'énergie d'excitation, réelle, pour laquelle la courbe de déclin de scintillation a été obtenue à l'étape a).

Dans un mode de mise en œuvre de la présente invention, la Figure 4 représente des courbes de déclin de scintillation mesurées au moyen d'un spectromètre à scintillation avec un matériau scintillateur CsI : Tl (Iodure de Césium dopé au Thallium) pour deux énergies de rayonnements ionisants différentes, à savoir des rayons d'excitation X de 17 keV et gamma de 662 KeV.

La courbe de déclin de scintillation supérieure 20 a été obtenue pour une énergie de rayonnement gamma de 662 keV et la courbe de déclin de scintillation inférieure 21 a été obtenue pour une énergie de rayonnement X de 17 keV.

Il ressort clairement que l'énergie du rayonnement d'excitation a une incidence sur le rapport dit « fast-to-tail ratio », lequel augmente lorsque l'énergie d'excitation diminue.

Ce changement dans la dynamique d'émission lumineuse est lié à la variation de la densité de charges électroniques produites lors de l'interaction de chaque particule gamma avec la matière.

Dans un second mode de mise de mise en œuvre de la présente invention, la Figure 5 illustre ainsi une partie de courbe de déclin de scintillation obtenue pour un spectromètre à scintillation avec un scintillateur inorganique de type halogénure alcalin pour différentes énergies de rayonnements ionisants : deux faisceaux (17 keV et 59 keV) issus d'atomes d'Américium 241 ($^{241}$Am) et un faisceau issu de Cobalt 57 ($^{57}$Co).
L'amplitude des signaux mesurés a été normalisée.
Avec ces trois portions de courbe obtenues pour des rayonnements ionisants connus, il est possible de déterminer les couples de paramètres d'ajustement $(PAJ_i(REF)$ / Energie de référence $E_i(REF))$ qui seront ultérieurement utilisés à l'étape c) du procédé pour déterminer l'énergie réelle de rayonnement ionisant, pour laquelle toute nouvelle courbe de déclin de scintillation est obtenue avec le même spectromètre à scintillation.
Pour cela, une fonction d'ajustement à double exponentielle est mise en œuvre pour ajuster, ou encore rendre compte de, la forme de chaque partie de courbe de déclin de scintillation illustrée à la Figure 5.
Cette fonction s'écrit :

$$A_1 \times e^{-t/t_1} + A_2 \times e^{-t/t_2}$$

Les paramètres d'ajustement de référence obtenus par ajustement de ces différentes courbes sont ainsi :

$A_1 [REF] = 0.41092$
$t_1 [REF] = 1.7$
$A_2 [REF] = 0.68106$

et le paramètre $t_2 [REF]$ qui est variable en fonction de l'énergie de rayonnement ionisant.
Ainsi grâce à ce paramètre $t_2$ de référence, il est dès lors possible de déterminer l'énergie du rayonnement $E_i(REF)$, sur l'axe des abscisses de la Figure 6, pour laquelle la mesure de toute nouvelle courbe de déclin de scintillation a été réalisée par le spectromètre à scintillation.
En conclusion, la courbe représentée à la Figure 6 n'étant pas assujettie à une quelconque calibration, elle constitue un graphe de référence permettant de calibrer une mesure obtenue par le spectromètre à scintillation.
Une fois ces paramètres de référence et énergies de référence associées déterminés, pour toute nouvelle mesure obtenue avec ce spectromètre à scintillation, après avoir réalisé les étapes a) et b) du présent procédé, on compare à l'étape c) les paramètres d'ajustement $(A_i, t_i)$ avec $i = 1, 2$ obtenus à l'étape b) du procédé pour la courbe de déclin de scintillation mesurée, avec les paramètres d'ajustement de référence $(A_1[REF], A_2[REF], t_1[REF], t_2[REF])$ décrits ci-dessus.
La mise en correspondance des paramètres d'ajustement obtenus à l'étape b) pour une énergie $E_i$ mesurée par le spectromètre à scintillation avec des paramètres d'ajustements de référence $(A_1[REF], A_2[REF], t_1[REF], t_2[REF])$ obtenus pour une énergie $E_i REF)$ de référence, permet dès lors de déterminer l'énergie de rayonnement réelle pour laquelle la courbe de déclin de scintillation a été mesurée.

Il devient dès lors possible d'étalonner le spectromètre à scintillation.

De manière très avantageuse, il ressort de ce qui précède que la détermination du ou des paramètres d'ajustement de référence, ainsi que de l'énergie de référence associée peut être réalisée à tout moment avec au moins deux sources de rayonnements ionisants connues.

Bien entendu, de telles conclusions pourraient encore être atteintes en réalisant non pas un ajustement d'au moins une partie de la courbe de déclin de scintillation par une fonction d'ajustement, mais par le calcul du rapport du nombre total de photons détectés sur au moins deux périodes de temps déterminées et distinctes, de la courbe de déclin de scintillation afin d'obtenir pour chaque énergie $E_i$ de rayonnement ionisant un nombre $a_i$.

A l'étape c) la comparaison du nombre $a_i$ avec une constante $a_i(REF)$ permet de déterminer l'énergie réelle, ou encore de référence, $E_i(REF)$ du rayonnement ionisant pour lequel la courbe a été mesurée par le spectromètre à scintillation.

Ainsi, et tel que représenté à la Figure 7, afin de déterminer les couples $(a_i(REF), E_i(REF))$, on détermine préalablement deux fenêtres temporelles sur les courbes de déclin de scintillation précédemment obtenues.

De manière générale, ces fenêtres temporelles se définissent typiquement par un dixième $(1/10^e)$ de la durée totale d'intégration.

Dans le présent cas, nous retiendrons un sixième $(1/6^e)$ de la durée totale de l'intégration, valeur qui correspond environ à 3 fois la constante de temps de la première exponentielle calculé dans le paragraphe précédent. Cette métrique donne des résultats satisfaisants pour ce type de scintillateur (halogénure alcalin).

On peut dès lors calculer l'intégrale des signaux dans ces deux fenêtres, et tracer le rapport (*Intégrale $T_1$/Intégrale $T_2$*) en fonction de l'énergie de référence $E_i(REF)$.

De même qu'avec le paramètre $t_2[REF]$ des ajustements multi exponentiels, nous avons ainsi accès grâce au tracé joignant les points de la Figure 8, à l'information énergie de référence, ou énergie réelle, mesurée par le spectromètre à scintillation via une mesure du rapport (*Intégrale $T_1$/Intégrale $T_2$*), lequel ne dépend pas d'une quelconque calibration.

## Revendications

**1.** Procédé de spectrométrie comprenant l'étape suivante :

a) pour au moins une énergie $E_i$ de rayonnement ionisant, obtenir, pour chaque énergie $E_i$, une courbe du nombre de photons détectés, pendant un intervalle de mesure, en fonction du temps, au moyen d'un spectromètre (15), ledit procédé étant **caractérisé en ce qu'**il comprend en outre les étapes suivantes :

b) pour chaque courbe ainsi obtenue, calculer un rapport du nombre total de photons détectés sur au moins deux périodes de temps déterminées et distinctes afin d'obtenir pour chaque énergie $E_i$ de rayonnement ionisant un nombre $a_i$, ou

pour chaque courbe ainsi obtenue, acquérir un ou plusieurs paramètres d'ajustement $PAJ_i$ en opérant un ajustement de ladite courbe correspondante par une fonction d'ajustement,

c) comparer chaque nombre $a_i$, ou chaque paramètre ou ensemble de paramètres d'ajustement $PAJ_i$ ainsi obtenus, avec des constantes $a_i(REF)$ de référence, ou respectivement avec des paramètres d'ajustement $PAJ_i(REF)$ de référence, associés à des énergies $E_i(REF)$ de référence pour déterminer pour chaque nombre $a_i$ ou chaque paramètre ou ensemble de paramètres d'ajustement $PAJ_i$, l'énergie $E_i(REF)$ de référence du rayonnement ionisant pour lequel ladite courbe correspondante a été mesurée.

**2.** Procédé selon la revendication 1, **caractérisé en ce qu'**à l'étape a), on obtient une courbe, pour au moins deux énergies différentes $E_i$ de rayonnement ionisant.

**3.** Procédé selon la revendication 1 ou 2, **caractérisé en ce qu'**à l'étape b), ledit ajustement est obtenu par une fonction d'ajustement multi-exponentielle.

**4.** Procédé selon l'une quelconque des revendications précédentes, **caractérisé en ce que** ledit spectromètre (15) comprenant un scintillateur (16) couplé à un photodétecteur (17), à l'étape b), on choisit lesdites périodes de temps de sorte à maximiser la différence entre les nombres $a_i$ pour deux énergies $E_i$ différentes.

**5.** Procédé selon l'une quelconque des revendications précédentes, **caractérisé en ce qu'**un scintillateur (16) présentant un facteur de non proportionnalité de son rendement de scintillation en fonction de l'énergie $E_i$ de rayonnement ionisant, supérieur ou égal à 2% de variation par ordre de grandeur de l'énergie du rayonnement incident est utilisé dans ledit spectromètre (15).

**6.** Procédé pour calibrer un spectromètre (15) **caractérisé en ce qu'**on utilise un procédé de spectrométrie selon l'une quelconque des revendications 1 à 5, et **en ce qu'**on réalise lesdites étapes supplémentaires suivantes :

d) comparer lesdites énergies $E_i(REF)$ de réfé-

rence de rayonnement ionisant déterminées à l'étape c) avec les énergies correspondantes $E_i$(mes) mesurées par ledit spectromètre (15) dans un spectre d'énergie du rayonnement ionisant, afin d'obtenir une valeur d'erreur associée à chaque mesure d'énergie de rayonnement ionisant $E_i$(mes), ladite valeur d'erreur étant une mesure d'un écart entre l'énergie mesurée $E_i$(mes) par ledit spectromètre (15) et l'énergie de référence $E_i$(REF) correspondante déterminée à l'étape c), et

e) lorsque plusieurs valeurs d'erreur sont non nulles et sont en valeur absolue supérieures à des valeurs seuils, déterminer une correction d'énergie à apporter de manière permanente à chaque énergie mesurée $E_i$(mes) par ce spectromètre (15).

7. Procédé pour augmenter la sensibilité spectrale d'un spectromètre (15), **caractérisé en ce qu'**on utilise un procédé de spectrométrie selon l'une quelconque des revendications 1 à 5, et **en ce qu'**on réalise pour chaque évènement mesuré par ledit spectromètre (15), les étapes supplémentaires suivantes :

d) déterminer la différence entre l'énergie $E_i$(mes) mesurée par ledit spectromètre (15) et ladite énergie $E_i$REF) de référence correspondante déterminée à l'étape c) afin d'obtenir une valeur d'écart en énergie pour ledit événement,
e) comparer la valeur absolue de cet écart en énergie avec une valeur seuil prédéterminée dite d'acceptabilité, et
f) si cette valeur absolue est inférieure ou égale à cette valeur seuil, alors comptabiliser cet évènement dans la création d'un spectre du nombre d'événement mesuré par le spectromètre (15) en fonction de l'énergie $E_i$REF) du rayonnement ionisant, et si cette valeur absolue est supérieure à cette valeur seuil, alors écarter l'évènement considéré, puis obtenir un spectre du nombre total d'événements mesurés pour chaque énergie $E_i$REF) de référence.

8. Dispositif de détection de rayonnement ionisant comprenant un ensemble de traitement comportant un microprocesseur et une unité de stockage informatique, ladite unité de stockage contenant une bibliothèque de données comprenant des données sur plusieurs rayonnements ionisants, ledit dispositif de détection comportant un spectromètre (15) comportant au moins un scintillateur (16) couplé à un photodétecteur (17), **caractérisé en ce que** ledit dispositif de détection est configuré pour mette en œuvre les étapes du procédé de spectrométrie selon l'une quelconque des revendications 1 à 5, ou du procédé de calibration selon la revendication 6 ou du procédé d'augmentation de la sensibilité spectrale selon la revendication 7.

9. Dispositif selon la revendication 8, **caractérisé en ce que** ledit photodétecteur (17) comprend un module de mesure configuré pour convertir un signal électrique émis par ledit photodétecteur (17) suite à la détection d'un photon et proportionnel au nombre de photons visibles détectés par le photodétecteur (17), en un signal numérique représentatif de l'énergie du photon mesuré.

10. Produit de programme informatique qui notamment est stocké sur un support lisible par ordinateur ou qui est mis en œuvre sous la forme d'un signal, dans lequel le produit de programme informatique comprend des instructions qui, lorsqu'elles sont exécutées par un dispositif selon la revendication 9 ou 10, font en sorte que ledit dispositif mette en œuvre les étapes du procédé de spectrométrie selon l'une quelconque des revendications 1 à 5, ou du procédé de calibration selon la revendication 6 ou du procédé d'augmentation de la sensibilité spectrale selon la revendication 7.

**Patentansprüche**

1. Spektrometrie-Verfahren, umfassend den folgenden Schritt:

a) für mindestens eine Energie $E_i$ ionisierender Strahlung, Erhalten einer Kurve der Anzahl von während eines Messintervalls detektierten Photonen als Funktion der Zeit mittels eines Spektrometers (15), für jede Energie $E_i$,

wobei das Verfahren **dadurch gekennzeichnet ist, dass** es weiter die folgenden Schritte umfasst:

b) für jede so erhaltene Kurve, Berechnen eines Verhältnisses der Gesamtzahl der über mindestens zwei bestimmte und unterschiedliche Zeiträume detektierten Photonen, um für jede Energie $E_i$ ionisierender Strahlung eine Zahl $a_i$ zu erhalten, oder
für jede so erhaltene Kurve, Erhalten eines oder mehrerer Anpassungsparameter $PAJ_i$ durch Durchführen einer Anpassung der entsprechenden Kurve durch eine Anpassungsfunktion,
c) Vergleichen jeder Zahl $a_i$ oder jedes Anpassungsparameters oder Satzes von Anpassungsparametern $PAJ_i$, die so erhalten wurden, mit Referenz-Konstanten $a_i$(REF) bzw. mit Referenz-Anpassungsparametern $PAJ_i$(REF), die Referenz-Energien $E_i$(REF) zugeordnet sind, um für jede Zahl $a_i$ oder jeden Anpassungsparameter oder Satz von Anpassungsparametern $PAJ_i$ die Referenz-Energie $E_i$(REF) der ionisie-

renden Strahlung zu bestimmen, für welche die entsprechende Kurve gemessen wurde.

2. Verfahren nach Anspruch 1, **dadurch gekennzeichnet, dass** in Schritt a) eine Kurve für mindestens zwei unterschiedliche Energien $E_i$ ionisierender Strahlung erhalten wird.

3. Verfahren nach Anspruch 1 oder 2, **dadurch gekennzeichnet, dass** in Schritt b) die Anpassung durch eine multi-exponentielle Anpassungsfunktion erhalten wird.

4. Verfahren nach einem der vorhergehenden Ansprüche, **dadurch gekennzeichnet, dass** das Spektrometer (15) einen mit einem Fotodetektor (17) gekoppelten Szintillator (16) umfasst, wobei in Schritt b) die Zeiträume so gewählt werden, dass die Differenz zwischen den Zahlen $a_i$ für zwei verschiedene Energien $E_i$ maximiert wird.

5. Verfahren nach einem der vorhergehenden Ansprüche, **dadurch gekennzeichnet, dass** in dem Spektrometer (15) ein Szintillator (16) verwendet wird, der einen Nichtproportionalitätsfaktor seiner Szintillationseffizienz in Abhängigkeit von der Energie $E_i$ der ionisierenden Strahlung von größer oder gleich 2 % Abweichung pro Größenordnung der einfallenden Strahlung aufweist.

6. Verfahren zum Kalibrieren eines Spektrometers (15), **dadurch gekennzeichnet, dass** ein Spektrometrie-Verfahren nach einem der Ansprüche 1 bis 5 verwendet wird, und dass die folgenden zusätzlichen Schritte ausgeführt werden:

   d) Vergleichen der in Schritt c) bestimmten Referenz-Energien $E_i$(REF) der ionisierenden Strahlung mit den entsprechenden Energien $E_i$(mes), die von dem Spektrometer (15) in einem Energiespektrum der ionisierenden Strahlung gemessen werden, um einen Fehlerwert zu erhalten, der jeder Messung der Energie der ionisierenden Strahlung $E_i$(mes) zugeordnet ist, wobei der Fehlerwert ein Maß einer Differenz zwischen der von dem Spektrometer (15) gemessenen Energie $E_i$(mes) und der entsprechenden, in Schritt c) bestimmten Referenz-Energie $E_i$(REF) ist, und
   e) dann, wenn mehrere Fehlerwerte ungleich Null sind und im Absolutwert größer als Schwellenwerte sind, Bestimmen einer Energiekorrektur, die permanent an jeder von diesem Spektrometer (15) gemessenen Energie $E_i$(mes) vorzunehmen ist.

7. Verfahren zur Erhöhung der spektralen Empfindlichkeit eines Spektrometers (15), **dadurch gekenn-**zeichnet, dass ein Spektrometrie-Verfahren nach einem der Ansprüche 1 bis 5 verwendet wird, und dass für jedes von dem Spektrometer (15) gemessene Ereignis die folgenden zusätzlichen Schritte durchgeführt werden:

   d) Bestimmen der Differenz zwischen der von dem Spektrometer (15) gemessenen Energie $E_i$(mes) und der entsprechenden in Schritt c) bestimmten Referenz-Energie $E_i$(REF), um einen Energiedifferenzwert für das Ereignis zu erhalten,
   e) Vergleichen des Absolutwerts dieser Energiedifferenz mit einem vorbestimmten Schwellenwert, der Akzeptabilität genannt wird, und
   f) falls der Absolutwert kleiner oder gleich dem Schwellenwert ist, dann Berücksichtigen dieses Ereignisses bei der Bildung eines Spektrums der Anzahl der vom Spektrometer (15) gemessenen Ereignisse als Funktion der Energie $E_i$(REF) der ionisierenden Strahlung, und falls der Absolutwert größer ist als der Schwellenwert, dann Ausschließen des betrachteten Ereignisses,

   danach Erhalten eines Spektrums der Gesamtzahl der gemessenen Ereignisse für jede Referenz-Energie $E_i$(REF).

8. Detektionsvorrichtung für ionisierende Strahlung, umfassend eine Verarbeitungseinheit mit einem Mikroprozessor und einer Daten-Speichereinheit, wobei die Speichereinheit eine Datenbibliothek enthält, die Daten über mehrere ionisierende Strahlungen umfasst, wobei die Detektionsvorrichtung ein Spektrometer (15) umfasst, das mindestens einen Szintillator (16) umfasst, der mit einem Fotodetektor (17) gekoppelt ist, **dadurch gekennzeichnet, dass** die Detektionsvorrichtung dazu konfiguriert ist, die Schritte des Spektrometrie-Verfahrens nach einem der Ansprüche 1 bis 5 oder des Verfahrens zum Kalibrieren nach Anspruch 6 oder des Verfahrens zur Erhöhung der spektralen Empfindlichkeit nach Anspruch 7 durchzuführen.

9. Vorrichtung nach Anspruch 8, **dadurch gekennzeichnet, dass** der Fotodetektor (17) ein Messmodul umfasst, das konfiguriert ist, um ein elektrisches Signal, das von dem Fotodetektor (17) nach der Detektion eines Photons emittiert wird und proportional zur Anzahl der sichtbaren Photonen ist, die vom Fotodetektor (17) detektiert werden, in ein digitales Signal umzuwandeln, das die Energie des gemessenen Photons darstellt.

10. Computerprogrammprodukt, das insbesondere auf einem computerlesbaren Medium gespeichert oder in Form eines Signals implementiert ist, wobei das Computerprogrammprodukt Anweisungen umfasst, die dann, wenn sie durch eine Vorrichtung nach Anspruch 9 oder 10 durchgeführt werden, bewirken, dass die Vorrichtung die Schritte des Spektrometrie-Verfahrens nach einem der Ansprüche 1 bis 5 oder des Verfahrens zum Kalibrieren nach Anspruch 6 oder des Verfahrens zur Erhöhung der spektralen Empfindlichkeit nach Anspruch 7 durchführt.

**Claims**

1. Spectrometry method comprising the following step:

   a) for at least one ionizing radiation energy $E_i$, obtaining, for each energy $E_i$, a curve of the number of photons detected, during a measurement interval, as a function of time, by means of a spectrometer (15), said method being **characterized in that** it further comprises the following steps:

   b) for each curve thus obtained, calculating a ratio of the total number of photons detected in at least two defined and distinct periods of time in order to obtain, for each ionizing radiation energy $E_i$, a number $a_i$, or for each curve thus obtained, acquiring one or more fitting parameters $PAJ_i$ by making a fit to said corresponding curve with a fitting function,

   c) comparing each number $a_i$, or each fitting parameter or set of fitting parameters $PAJ_i$ thus obtained, with reference constants $a_i(REF)$ or, respectively, with reference fitting parameters $PAJ_i(REF)$ associated with reference energies $E_i(REF)$, in order to determine, for each number $a_i$ or each fitting parameter or set of fitting parameters $PAJ_i$, the reference energy $E_i(REF)$ of the ionizing radiation for which said corresponding curve was measured.

2. Method according to Claim 1, **characterized in that**, in step a), a curve is obtained for at least two different ionizing radiation energies $E_i$.

3. Method according to Claim 1 or 2, **characterized in that**, in step b), said fit is obtained with a multi-exponential fitting function.

4. Method according to any one of the preceding claims, **characterized in that**, said spectrometer (15) comprising a scintillator (16) coupled to a photodetector (17), in step b) said periods of time are chosen so as to maximize the difference between the numbers $a_i$ for two different energies $E_i$.

5. Method according to any one of the preceding claims, **characterized in that** a scintillator (16), the scintillation yield of which as a function of the ionizing

radiation energy $E_i$ has a non-proportionality higher than or equal to 2% of variation per order of magnitude of the energy of the incident radiation, is used in said spectrometer (15).

6. Method for calibrating a spectrometer (15), **characterized in that** a spectrometry method according to any one of Claims 1 to 5 is used, and **in that** the following additional steps are carried out:

   d) comparing said reference ionizing radiation energies $E_i(REF)$ determined in step c) with the corresponding energies $E_i(mes)$ measured by said spectrometer (15) in an energy spectrum of the ionizing radiation, in order to obtain an error value associated with each ionizing radiation energy $E_i(mes)$ measurement, said error value being a measurement of a discrepancy between the energy $E_i(mes)$ measured by said spectrometer (15) and the corresponding reference energy $E_i(REF)$ determined in step c), and

   e) when a plurality of error values are non-zero and are higher in absolute value than threshold values, determining an energy correction to be made permanently to each energy $E_i(mes)$ measured by this spectrometer (15) .

7. Method for increasing the spectral sensitivity of a spectrometer (15), **characterized in that** a spectrometry method according to any one of Claims 1 to 5 is used, and **in that**, for each event measured by said spectrometer (15), the following additional steps are carried out:

   d) determining the difference between the energy $E_i(mes)$ measured by said spectrometer (15) and said corresponding reference energy $E_i(REF)$ determined in step c) in order to obtain an energy discrepancy value for said event,

   e) comparing the absolute value of this energy discrepancy with a predetermined threshold value referred to as the acceptability threshold value, and

   f) if this absolute value is lower than or equal to this threshold value, then counting this event in the creation of a spectrum of the number of events measured by the spectrometer (15) as a function of the energy $E_i(REF)$ of the ionizing radiation and, if this absolute value is higher than this threshold value, then discarding the event in question, then obtaining a spectrum of the total number of events measured for each reference energy $E_i(REF)$.

8. Device for detecting ionizing radiation comprising a processing system including a microprocessor and a data storage unit, said storage unit containing a data library comprising data on a variety of ionizing radiation, said detection device including a spectrometer (15) including at least one scintillator (16) coupled to a photodetector (17), **characterized in that** said detection device is configured to implement the steps of the spectrometry method according to any one of Claims 1 to 5, or of the calibration method according to Claim 6 or of the method for increasing the spectral sensitivity according to Claim 7.

9. Device according to Claim 8, **characterized in that** said photodetector (17) comprises a measurement module configured to convert an electrical signal, which is sent by said photodetector (17) following the detection of a photon and which is proportional to the number of visible photons detected by the photodetector (17), into a digital signal representative of the energy of the measured photon.

10. Computer program product which is notably stored on a computer-readable medium or which is implemented in the form of a signal, wherein the computer program product comprises instructions which, when they are executed by a device according to Claim 9 or 10, make said device implement the steps of the spectrometry method according to any one of Claims 1 to 5, or of the calibration method according to Claim 6 or of the method for increasing the spectral sensitivity according to Claim 7.

**FIGURE 1**

**FIGURE 2**

**FIGURE 3**

**FIGURE 4**

**FIGURE 5**

**FIGURE 6**

**FIGURE 7**

FIGURE 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011101232 A
- FR 3020470
- US 7065473 B
- US 2018113160 A